(19) Europäisches Patentamt
European Patent Office
Office européen des brevets

(11) **EP 3 170 628 B1**

(12) **EUROPÄISCHE PATENTSCHRIFT**

(45) Veröffentlichungstag und Bekanntmachung des Hinweises auf die Patenterteilung:
**13.11.2024   Patentblatt 2024/46**

(21) Anmeldenummer: **16002371.9**

(22) Anmeldetag: **09.11.2016**

(51) Internationale Patentklassifikation (IPC):
**B25J 9/16** *(2006.01)*

(52) Gemeinsame Patentklassifikation (CPC):
**B25J 9/1651; B25J 9/1664;** G05B 2219/39339;
G05B 2219/43203

(54) **STEUERUNG EINES ROBOTERS MIT DÄMPFUNGSANTRIEBSGRÖSSE ERMITTLUNG**

CONTROL SYSTEM OF A ROBOT WITH DAMPING DRIVE AMOUNT DETERMINATION

COMMANDE D'UN ROBOT AVEC DÉTERMINATION D'UNE GRANDEUR D'AMORTISSEMENT D'ENTRAÎNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.11.2015   DE 102015014994**

(43) Veröffentlichungstag der Anmeldung:
**24.05.2017   Patentblatt 2017/21**

(73) Patentinhaber: **KUKA Deutschland GmbH
86165 Augsburg (DE)**

(72) Erfinder:
• **Rohmer, Matthias
86157 Augsburg (DE)**
• **Mueller-Sommer, Martin
86447 Aindling (DE)**
• **Ueberle, Marc-Walter
86316 Friedberg (DE)**
• **Schreiber, Günter
86316 Friedberg (DE)**
• **Bonin, Uwe
86161 Augsburg (DE)**

(74) Vertreter: **Schlotter, Alexander Carolus Paul et al
Wallinger Ricker Schlotter Tostmann
Patent- und Rechtsanwälte Partnerschaft mbB
Zweibrückenstrasse 5-7
80331 München (DE)**

(56) Entgegenhaltungen:
**US-A1- 2004 128 026     US-A1- 2013 172 902**

• **PETER ENGLERT: "Simulation des Fräsens mit Industrierobotern: Trajektorienplanung und experimentelle Parameteridentifikation", 1 May 2011 (2011-05-01), XP055354054, Retrieved from the Internet <URL:https://www.sim.informatik.tu-darmstadt. de/publ/da/2011-Englert-Bachelorarbeit.pdf> [retrieved on 20170313]**
• **NIRUT NAKSUK: "The implementation of a Natural Admittance Controller on an industrial Robot", THESIS CASE WESTERN RESERVE UNIVERSITY, XX, XX, 1 January 2000 (2000-01-01), pages 1 - 74, XP002345462**

EP 3 170 628 B1

**Beschreibung**

Die vorliegende Erfindung betrifft ein Verfahren und ein System zum Steuern eines Roboters sowie ein Computerprogrammprodukt zur Durchführung des Verfahrens.

Aus der US 2004/0128026 A1 ist eine Robotersteuerung mit einer Admittanzregelung bekannt, deren Regelparameter erhöht werden, wenn der Roboter sich einer vorgegebenen Grenze nähert.

Aufgabe der vorliegenden Erfindung ist es, eine Robotersteuerung zu verbessern.

Diese Aufgabe wird durch ein Verfahren mit den Merkmalen des Anspruchs 1 gelöst. Ansprüche 5, 6 stellen ein System zum Steuern eines Roboters nach einem hier beschriebenen Verfahren bzw. ein Computerprogrammprodukt zur Durchführung eines hier beschriebenen Verfahrens unter Schutz. Die Unteransprüche betreffen vorteilhafte Weiterbildungen.

Nach einer Ausführung der vorliegenden Erfindung weist ein Verfahren zum Steuern eines Roboters die, insbesondere automatisierten bzw. rechnergestützten, Schritte auf:

- Ermitteln einer Ist-Geschwindigkeit des Roboters;
- Ermitteln einer Soll-Geschwindigkeit;
- Ermitteln einer Dämpfungs-Antriebsgröße auf Basis bzw. in Abhängigkeit von einer Differenz zwischen der Soll-Geschwindigkeit und der Ist-Geschwindigkeit; und
- Ansteuern einer Antriebsanordnung mit einem oder mehreren Antrieben des Roboters auf Basis bzw. in Abhängigkeit von der Dämpfungs-Antriebsgröße,
  wobei die Soll-Geschwindigkeit auf Basis bzw. in Abhängigkeit von
- einer vorgegebenen Maximalgeschwindigkeit,
- einer vorgegebenen Minimalgeschwindigkeit und/oder
- eines Abstands bzw. einem Abstand des Roboters zu einer oder mehreren vorgegebenen Grenzen ermittelt wird.

Eine Geschwindigkeit, insbesondere die Ist- und/oder Soll-Geschwindigkeit, kann in einer Ausführung eine ein- oder mehrdimensionale translatorische und/oder rotatorische Geschwindigkeit einer roboterfesten Referenz, insbesondere des TCPs, des Roboters umfassen, insbesondere sein, insbesondere eine Geschwindigkeit(skomponente) in einer oder mehreren Raumrichtungen bzw. Freiheitsgraden. Gleichermaßen kann eine ein- oder mehrdimensionale Geschwindigkeit, insbesondere die Ist- und/oder Soll-Geschwindigkeit, in einer Ausführung eine translatorische und/oder rotatorische Geschwindigkeit eines oder mehrerer Antriebe und/oder Gelenke bzw. Gelenkfreiheitsgraden des Roboters umfassen, insbesondere sein. Sie wird hier verallgemeinernd mit $\dot{q}$ bezeichnet.

Eine Ist-Geschwindigkeit kann in einer Ausführung mittels entsprechender Sensoren erfasst werden, wobei in einer Weiterbildung eine Geschwindigkeit einer roboterfesten Referenz auf Basis einer gemessenen Geschwindigkeit von Gelenken des Roboters mittels einer Vorwärtstransformation ermittelt werden kann.

Der Roboter weist in einer Ausführung ein oder mehrere, insbesondere wenigstens sechs oder mehr Achsen bzw. Gelenke, insbesondere Dreh- und/oder Linear- bzw. Schubachsen bzw. -gelenke, und in einer Weiterbildung Antriebe, insbesondere Elektromotoren, zum Bewegen der Achsen bzw. Gelenke auf. Er ist in einer Ausführung ein Industrieroboter.

Eine ein- oder mehrdimensionale Antriebsgröße kann in einer Ausführung eine oder mehrere Antriebskräfte und/oder -(dreh)momente des Roboters umfassen, insbesondere sein. Sie wird hier verallgemeinernd mit $\tau$ bezeichnet.

In einer Ausführung wird die Antriebsanordnung auf Basis einer Antriebsgröße, insbesondere der Dämpfungs-Antriebsgröße und in einer Weiterbildung einer oder mehrerer weiterer Antriebsgrößen, insbesondere der nachfolgend erläuterten Nachgiebigkeits-Antriebsgröße, derart angesteuert, dass sie (auch) diese Antriebsgröße(n) aufzuprägen bzw. auszuüben (ver)sucht, insbesondere (auch) diese, wenigstens im Wesentlichen, aufprägt bzw. ausübt. Entsprechend kann eine solche Antriebsgröße insbesondere eine oder mehrere Soll- oder Ist-Antriebskräfte und/oder -(dreh)momente des Roboters bzw. Anteile hiervon umfassen, insbesondere sein.

Durch die Dämpfungs-Antriebsgröße kann in einer Ausführung eine Bewegung des Roboters, insbesondere eine durch eine Nachgiebigkeitsregelung und/oder Handführung des Roboters kommandierte Bewegung, in vorteilhafter Weise gedämpft werden. Mit anderen Worten wird in einer Ausführung eine Dämpfung zur Verfügung gestellt, die in einer Weiterbildung in vorteilhafter Weise zusätzlich bzw. parallel zu einer Dämpfung im Rahmen einer Nachgiebigkeitsregelung wirkt.

Durch eine Ermittlung der Soll-Geschwindigkeit auf Basis der, insbesondere fest oder variabel, vorgegebenen ein- oder mehrdimensionalen Maximalgeschwindigkeit kann in einer Ausführung vorteilhaft eine Geschwindigkeit des Roboters, insbesondere bei einer durch eine Nachgiebigkeitsregelung und/oder Handführung des Roboters kommandierten Bewegung, begrenzt werden: überschreitet die Ist-Geschwindigkeit die vorgegebene Maximalgeschwindigkeit, bremst in einer Weiterbildung die Dämpfungs-Antriebsgröße eine solche Bewegung, insbesondere komponentenweise.

Durch eine Ermittlung der Soll-Geschwindigkeit auf Basis der, insbesondere fest oder variabel, vorgegebenen ein- oder mehrdimensionalen Minimalgeschwindigkeit wird in einer Ausführung vorteilhaft eine Bewegung des Roboters, insbesondere eine durch eine Nachgiebigkeitsregelung und/oder Handführung des Roboters kommandierte Bewegung, unterhalb dieser Minimalgeschwindigkeit höchstens in begrenztem Umfang, insbesondere, wenigstens im Wesentlichen, nicht, durch die Dämpfungs-Antriebsgröße beeinflusst, insbesondere komponentenweise.

Durch eine Ermittlung einer Soll-Geschwindigkeit auf Basis des ein- oder mehrdimensionalen Abstandes des Roboters zu einer vorgegebenen Grenze wird in einer Ausführung vorteilhaft eine Bewegung des Roboters, insbesondere eine durch eine Nachgiebigkeitsregelung und/oder Handführung des Roboters kommandierte Bewegung, bei Annäherung an die bzw. in der Nähe der entsprechende(n) Grenze durch die Dämpfungs-Antriebsgröße stärker gedämpft bzw. bei einem größeren Abstand zu der jeweiligen Grenze durch die Dämpfungs-Antriebsgröße schwächer gedämpft, so dass insbesondere in einem zulässigen, durch die Grenze(n) definierten Bereich vorteilhaft eine freie(re) Bewegung ermöglicht wird, insbesondere komponentenweise.

Ein Abstand des Roboters zu einer vorgegebenen Grenze kann in einer Ausführung ein Abstand einer bzw. der roboterfesten Referenz, insbesondere des TCPs, des Roboters zu einer im Arbeitsraum des Roboters vorgegebenen Grenze sein. Gleichermaßen kann ein Abstand des Roboters zu einer vorgegebenen Grenze in einer Ausführung ein(en) Abstand einer Gelenk- und/oder Antriebsposition zu einer im Gelenk- bzw. Antriebskoordinatenraum des Roboters vorgegebenen Grenze umfassen, insbesondere sein.

Verallgemeinernd wird eine ein- oder mehrdimensionale Obergrenze mit $q_{max}$ bezeichnet, eine ein- oder mehrdimensionale Untergrenze mit $q_{min}$ und eine ein- oder mehrdimensionale (Ist-)Pose bzw. Position des Roboters im Arbeits- oder Gelenk- bzw. Antriebskoordinatenraum des Roboters mit $\boldsymbol{q_{ist}}$. Dann kann in einer Ausführung der ein- oder mehrdimensionale Abstand $\boldsymbol{dist_j}$ des Roboters zu einer vorgegebenen Grenze i, insbesondere komponentenweise bzw. für die j-te Komponente bzw. Koordinate, gemäß

$$\mathbf{dist}_i = \left(\mathbf{q}_{\max,i} - \mathbf{q}_{ist}\right) \text{bzw.} \quad dist_{j,i} = \left(q_{j,\max,i} - q_{j,ist}\right) \qquad (1)$$

bzw.

$$\mathbf{dist}_i = \left(\mathbf{q}_{ist} - \mathbf{q}_{\min,i}\right) \text{bzw.} \quad dist_{j,i} = \left(q_{j,ist} - q_{j,\min,i}\right) \qquad (1')$$

definiert sein bzw. ermittelt werden. Man erkennt, dass in einer Ausführung allgemein der Abstand vorzeichenbehaftet und, insbesondere komponentenweise, genau dann positiv ist, wenn der Roboter sich unter einer vorgegebenen Ober- bzw. über einer vorgegebenen Untergrenze bzw. in einem zulässigen Bereich befindet, und umgekehrt, insbesondere komponentenweise, genau dann negativ ist, wenn der Roboter sich über einer vorgegebenen Ober- bzw. unter einer vorgegebenen Untergrenze bzw. in einem unzulässigen Bereich befindet.

Entsprechend wird in einer Ausführung die Soll-Geschwindigkeit allgemein, insbesondere komponentenweise, derart ermittelt, dass sie bei betragsmäßig gleichem Abstand des Roboters zu derselben vorgegebenen Grenze (absolut bzw. vorzeichenberücksichtigend) größer ist, sofern der Roboter sich auf einer zulässigen Seite der Grenze befindet, und (absolut bzw. vorzeichenberücksichtigend) kleiner ist, sofern der Roboter sich auf einer unzulässigen Seite der Grenze befindet.

Sind in einer Ausführung $n \geq 1$ Grenzen vorgegeben, insbesondere eine oder mehrere Ober- und Untergrenzen für eine oder mehrere Komponenten bzw. Koordinaten der Pose bzw. Position des Roboters, insbesondere im Arbeits- oder Gelenk- bzw. Antriebskoordinatenraum, so wird in einer Weiterbildung der (absolut gesehen) kleinste Abstand, insbesondere die (absolut gesehen) kleinste Komponente des mehrdimensionalen Abstandes, als der (eindimensionale) Abstand *dist* des Roboters zu all diesen vorgegebenen Grenzen ermittelt, gegebenenfalls also der betragsmäßig größte negative Abstand:

$$dist = \min_{\substack{i=1,\ldots,n \\ (j=1,\ldots,f)}} \left\{ dist_{(j,)i} \right\}; \quad \mathbf{dist} = \left[dist, dist, \ldots\right]^T \ (1'')$$

Hierdurch wird vorteilhaft eine gegebenenfalls am stärksten verletzte Grenze berücksichtigt. Gleichermaßen kann der Abstand, auf dessen Basis die Soll-Geschwindigkeit ermittelt wird, in entsprechender Weise auch mehrdimensional sein, insbesondere für verschiedene Raumrichtungen des Arbeitsraums oder verschiedene Gelenke bzw. Antriebe des Roboters bzw. komponentenweise, ermittelt werden:

$$dist_j = \min_{i=1,\ldots,n}\left\{dist_{j,i}\right\}; \quad \mathbf{dist} = \left[dist_1, dist_2, \ldots, dist_f\right]^T \quad (1'')$$

Die vorstehend erwähnte Nachgiebigkeits-Antriebsgröße wird auf Basis einer Impedanz- oder Admittanzregelung ermittelt und die Antriebsanordnung wird auf Basis einer Summe der Dämpfungs-Antriebsgröße und der der Nachgiebigkeits-Antriebsgröße angesteuert.

Die Impedanz- oder Admittanzregelung vermittelt eine Feder-Dämpfer- oder eine Masse-Feder-Dämpfer-Charakteristik, des Roboters, so dass dieser einer virtuellen Feder bzw. Feder-Dämpfer-Anordnung folgt bzw. als (Masse)-Feder(-Dämpfer)-System mit einer durch Regelparameter vorgebbaren Steifigkeit und/oder Dämpfung (re)agiert. Diesbezüglich wird ergänzend auf die eingangs genannte US 2004/0128026 A1 Bezug genommen. Zur kompakteren Darstellung wird vorliegend verallgemeinernd auch eine Regelung als Steuerung im Sinne der vorliegenden Erfindung bezeichnet, so dass beispielsweise ein Steuern eines Roboters bzw. ein Ansteuern einer Antriebsanordnung insbesondere auch ein Regeln des Roboters bzw. eine Regelung der Antriebsanordnung umfasst.

Durch eine an sich bekannte Nachgiebigkeitsregelung kann ein vorteilhaftes Verhalten des Roboters realisiert werden, insbesondere eine Handführung und/oder ein vorteilhaftes Kollisionsverhalten. Da die Dämpfungs-Antriebsgröße additiv zu der Nachgiebigkeits-Antriebsgröße der Nachgiebigkeitsregelung aufgeprägt bzw. die Antriebsanordnung auf Basis der Summe von Dämpfungs- und Nachgiebigkeits-Antriebsgröße angesteuert wird, kann vorteilhafterweise die Dämpfung der Nachgiebigkeitsregelung auf deren Steifigkeit abgestimmt werden, insbesondere um ein Überschwingen zu reduzieren, insbesondere zu vermeiden, und zugleich durch die hiervon unabhängige Dämpfungs-Antriebsgröße eine Begrenzung auf eine Maximalgeschwindigkeit und/oder eine stärkere Dämpfung in der Nähe von vorgegebenen Grenzen zur Verfügung gestellt werden.

Entsprechend hängt in einer Weiterbildung eine Dämpfung, insbesondere ein Dämpfungsparameter bzw. -koeffizient, der Nachgiebigkeitsregelung von einer Steifigkeit, insbesondere einem Steifgkeitsparameter bzw. -koeffizient, der Nachgiebigkeitsregelung ab, insbesondere linear und/oder auf Basis einer Lehrschen Dämpfung.

In einer Ausführung wird bzw. ist die Soll-Geschwindigkeit, die nachfolgend ohne Beschränkung der Allgemeinheit mit $\dot{q}_{soll}$ bezeichnet wird, insbesondere komponentenweise, betragsmäßig durch die vorgegebene Maximalgeschwindigkeit, welche nachfolgend ohne Beschränkung der Allgemeinheit mit $\dot{q}_{max}$ bezeichnet wird, nach oben begrenzt. Zusätzlich oder alternativ wird bzw. ist die Soll-Geschwindigkeit $\dot{q}_{soll}$, insbesondere komponentenweise, betragsmäßig durch die vorgegebene

Minimalgeschwindigkeit, welche nachfolgend ohne Beschränkung der Allgemeinheit mit $\dot{q}_{min}$ bezeichnet wird, nach unten begrenzt:

$$\left|\dot{\boldsymbol{q}}_{\min}\right| \leq \left|\dot{\boldsymbol{q}}_{soll}\right| \leq \left|\dot{\boldsymbol{q}}_{\max}\right| \quad (2)$$

Mehrdimensionale Geschwindigkeiten können komponentenweise entsprechend begrenzt sein:

$$\left|\dot{q}_{j,\min}\right| \leq \left|\dot{q}_{j,soll}\right| \leq \left|\dot{q}_{j,\max}\right| \quad (2)$$

In einer Ausführung kann die Soll-Geschwindigkeit, insbesondere komponentenweise, gemäß

$$\dot{\mathbf{q}}_{soll} = \mathbf{K}_{Pq} \cdot \mathbf{dist} \quad (3)$$

oder

$$\dot{\mathbf{q}}_{soll} = \mathbf{K}_{Pq} \cdot \mathbf{dist} + \left|\dot{\mathbf{q}}_{\min}\right| \quad (3')$$

mit der vorgegebenen ein- oder mehrdimensionalen positiven Konstante $K_{Pq} = diag(K_{1,Pq}, K_{2,Pq}, \ldots)$ und dem Vektor $|\dot{q}_{min}| = [|\dot{q}_{1,min}|, |\dot{q}_{2,min}|, \ldots]^T$ definiert sein bzw. ermittelt werden, wobei der ein- oder mehrdimensionale Abstand insbesondere gemäß Gleichung (1)-(1") definiert sein bzw. ermittelt werden kann, insbesondere unter der zusätzlichen Randbedingung (2):

$$dist_{(j)} < 0 \overset{(3)}{\Rightarrow} \dot{q}_{j,soll} < 0 \overset{(2)}{\Rightarrow} \dot{q}_{j,soll} = \dot{q}_{j,\min} \qquad (4)$$

bzw.

$$dist_{(j)} < 0 \overset{(3')}{\Rightarrow} \dot{q}_{j,soll} < \left| \dot{q}_{j,\min} \right| \overset{(2)}{\Rightarrow} \dot{q}_{j,soll} = \dot{q}_{j,\min} \qquad (4')$$

Mit anderen Worten wird in einer Ausführung als Soll-Geschwindigkeit, insbesondere komponentenweise, die vorgegebene Minimalgeschwindigkeit ermittelt, wenn der Roboter sich im unzulässigen Bereich jenseits der vorgegebenen Grenze(n) befindet ($dist_{(j)}$ < 0).

Zusätzlich oder alternativ wird in einer Ausführung, insbesondere komponentenweise, unter der zusätzlichen Randbedingung (2) als Soll-Geschwindigkeit die vorgegebene Maximalgeschwindigkeit ermittelt, wenn der Roboter sich im zulässigen Bereich diesseits der vorgegebenen Grenze(n) befindet ($dist_{(j)}$ > 0) und von diesen einen vorgegebenen Abstand aufweist:

$$K_{(j,)Pq} \cdot dist_{(j)} > \left| \dot{q}_{j,\max} \right| \overset{(3)}{\Rightarrow} \dot{q}_{j,soll} > \left| \dot{q}_{j,\max} \right| \overset{(2)}{\Rightarrow} \dot{q}_{j,soll} = \left| \dot{q}_{j,\max} \right| \qquad (5)$$

bzw.

$$K_{(j,)Pq} \cdot dist_{(j)} + \left| \dot{q}_{j,\min} \right| > \left| \dot{q}_{j,\max} \right| \overset{(3')}{\Rightarrow} \dot{q}_{j,soll} > \left| \dot{q}_{j,\max} \right| \overset{(2)}{\Rightarrow} \dot{q}_{j,soll} = \left| \dot{q}_{j,\max} \right| \qquad (5')$$

Zusätzlich oder alternativ wächst in einer Ausführung die Soll-Geschwindigkeit, insbesondere komponentenweise, betragsmäßig mit dem Abstand des Roboters zu einer vorgegebenen Grenze, insbesondere linear bzw. gemäß Gleichung (3) bzw. (3'), wenn der Roboter sich auf einer zulässigen Seite dieser Grenze befindet, insbesondere bis zu der vorgegebenen Maximalgeschwindigkeit.

Wie vorstehend erläutert, kann dies insbesondere komponentenweise gelten, also beispielsweise für die j-te Komponente $\dot{q}_{j,soll}$ der Soll-Geschwindigkeit $\dot{q}_{soll}$:

$$\dot{q}_{j,soll} = K_{j,Pq} \cdot dist_{(j)} \qquad (3)$$

oder

$$\dot{q}_{soll,j} = K_{j,Pq} \cdot dist_{(j)} + \left| \dot{q}_{j,\min} \right| \qquad (3')$$

wobei $dist_{(j)}$ den eindimensionalen Abstand bzw. die entsprechende j-te Komponente des mehrdimensionalen Abstandes gemäß Gleichung (1)-(1") und $\dot{q}_{j,\min}$ die eindimensionale Minimalgeschwindigkeit oder die entsprechende Komponente der mehrdimensionalen Minimalgeschwindigkeit sein kann.

In einer Ausführung ist bzw. wirkt die Dämpfungs-Antriebsgröße, welche hier verallgemeinernd mit $\tau_d$ bezeichnet wird, insbesondere komponentenweise, gegensinnig zur Ist-Geschwindigkeit, die hier verallgemeinernd mit $\dot{q}_{ist}$ bezeich-net wird, bzw. sucht diese zu reduzieren. Unter Beachtung der Vorzeichen gilt in einer Ausführung insbesondere

$$\dot{q}_{ist} > 0 \Rightarrow \tau_d \leq 0; \quad \dot{q}_{ist} < 0 \Rightarrow \tau_d \geq 0 \quad (6)$$

bzw.

$$\dot{q}_{j,ist} > 0 \Rightarrow \tau_{j,d} \leq 0; \quad \dot{q}_{j,ist} < 0 \Rightarrow \tau_{j,d} \geq 0 \qquad (6)$$

Zusätzlich wird die Dämpfungs-Antriebsgröße $\tau_d$, insbesondere komponentenweise, derart ermittelt, dass sie gleich Null ist, sofern die (Komponente der) Soll-Geschwindigkeit die (Komponente der) Ist-Geschwindigkeit betragsmäßig übersteigt:

$$\left|\dot{\boldsymbol{q}}_{soll}\right| > \left|\dot{\boldsymbol{q}}_{ist}\right| \Rightarrow \boldsymbol{\tau}_d = 0 \quad (7')$$

Mit anderen Worten wird in einer Ausführung, wenigstens im Wesentlichen, keine Dämpfungs-Antriebsgröße bzw. Komponente in dem entsprechenden Freiheitsgrad aufgeprägt bzw. kommandiert, sofern die Ist-Geschwindigkeit betragsmäßig unter der Soll-Geschwindigkeit liegt. Wie erwähnt, kann die Gleichung (7') insbesondere komponentenweise gelten:

$$\left|\dot{q}_{j,soll}\right| > \left|\dot{q}_{j,ist}\right| \Rightarrow \tau_{j,d} = 0 \qquad (7')$$

Zusätzlich oder alternativ wird bzw. ist in einer Ausführung die Dämpfungs-Antriebsgröße $\tau_d$, insbesondere komponentenweise, betragsmäßig durch eine vorgegebene Maximalgröße, welche nachfolgend ohne Beschränkung der Allgemeinheit mit $\tau_{\max}$ bezeichnet wird, nach oben begrenzt:

$$\left|\boldsymbol{\tau}_d\right| \leq \tau_{\max} \qquad (8)$$

bzw.

$$\left|\tau_{j,d}\right| \leq \tau_{j,\max} \qquad (8)$$

Zusätzlich wird die Dämpfungs-Antriebsgröße, insbesondere komponentenweise, derart ermittelt, dass betragsmäßig proportional zur Differenz zwischen der (entsprechenden Komponente der) Soll-Geschwindigkeit und der (entsprechenden Komponente der) Ist-Geschwindigkeit ist, wenn die (entsprechende Komponente der) Ist-Geschwindigkeit die (entsprechende Komponente der) Soll-Geschwindigkeit betragsmäßig übersteigt:

$$\left|\dot{\boldsymbol{q}}_{ist}\right| - \left|\dot{\boldsymbol{q}}_{soll}\right| > 0 \Rightarrow \left|\boldsymbol{\tau}_d\right| = \mathbf{K}_{Pv} \cdot \left(\left|\dot{\boldsymbol{q}}_{soll}\right| - \left|\dot{\boldsymbol{q}}_{ist}\right|\right) \quad (9'),$$

mit der vorgegenbenen ein- ode5r mehrdimensionalen Konstante $K_{pv} = diag(K1_{,pv}...)$, insbesondere unter der zusätzlichen Randbedingung (6), (7') und/oder (8). Die randbedingung (6) kann insbesondere gemäß

$$\left|\dot{\mathbf{q}}_{ist}\right| - \left|\dot{\mathbf{q}}_{soll}\right| > 0 \Rightarrow \boldsymbol{\tau}_d = \mathrm{sgn}\left(\dot{\mathbf{q}}_{ist}\right) \cdot \mathbf{K}_{Pv} \cdot \left(\left|\dot{\mathbf{q}}_{soll}\right| - \left|\dot{\mathbf{q}}_{ist}\right|\right) \qquad (9'')$$

mit der Vorzeichen- bzw. Signum-Funktion sgn berücksichtigt sein bzw. werden, wobei $\tau_d$ und $\dot{\boldsymbol{q}}_{ist}$ vorzeichengleich definiert sind, d.h. die Dämpfungs-Antriebsgröße $\tau_d$ der Ist-Geschwindigkeit $\dot{\boldsymbol{q}}_{ist}$ jeweils entgegengerichtet ist bzw. wirkt.
Wie bereits erwähnt, können auch Gleichungen (9')-(9'') insbesondere komponentenweise gelten:

$$\left|\dot{q}_{j,ist}\right| - \left|\dot{q}_{j,soll}\right| > 0 \Rightarrow \left|\tau_{j,d}\right| = K_{j,Pv} \cdot \left(\left|\dot{q}_{j,soll}\right| - \left|\dot{q}_{j,ist}\right|\right) \qquad (9'),$$

bzw.

$$\left|\dot{q}_{j,ist}\right| - \left|\dot{q}_{j,soll}\right| > 0 \Rightarrow \tau_{j,d} = \mathrm{sgn}\left(\dot{q}_{j,ist}\right) \cdot K_{j,Pv} \cdot \left(\left|\dot{q}_{j,soll}\right| - \left|\dot{q}_{j,ist}\right|\right) \quad (9''),$$

Nach der vorliegenden Erfindung ist ein System zum Steuern eines Roboters nach Anspruch 5.
In einer Ausführung weist das System Mittel zum betragsmäßigen Begrenzen der Soll-Geschwindigkeit durch die vorgegebene Maximalgeschwindigkeit nach oben und/oder durch die vorgegebene Minimalgeschwindigkeit nach unten auf.

In einer Ausführung weist das System Mittel auf zum Ermitteln der Soll-Geschwindigkeit derart, dass sie bei betragsmäßig gleichem Abstand des Roboters zu derselben vorgegebenen Grenze größer ist, sofern der Roboter sich auf einer zulässigen Seite der Grenze befindet, und kleiner ist, sofern der Roboter sich auf einer unzulässigen Seite der Grenze befindet.

In einer Ausführung weist das System Mittel zum, insbesondere komponentenweisen, betragsmäßigen Begrenzen der Dämpfungs-Antriebsgröße durch eine vorgegebene Maximalgröße nach oben auf.

Ein Mittel im Sinne der vorliegenden Erfindung kann hard- und/oder softwaretechnisch ausgebildet sein, insbesondere eine, vorzugsweise mit einem Speicher- und/oder Bussystem daten- bzw. signalverbundene, insbesondere digitale, Verarbeitungs-, insbesondere Mikroprozessoreinheit (CPU) und/oder ein oder mehrere Programme oder Programmmodule aufweisen. Die CPU kann dazu ausgebildet sein, Befehle, die als ein in einem Speichersystem abgelegtes Programm implementiert sind, abzuarbeiten, Eingangssignale von einem Datenbus zu erfassen und/oder Ausgangssignale an einen Datenbus abzugeben. Ein Speichersystem kann ein oder mehrere, insbesondere verschiedene, Speichermedien, insbesondere optische, magnetische, Festkörper- und/oder andere nicht-flüchtige Medien aufweisen. Das Programm kann derart beschaffen sein, dass es die hier beschriebenen Verfahren verkörpert bzw. auszuführen imstande ist, sodass die CPU die Schritte solcher Verfahren ausführen kann und damit insbesondere den Roboter steuern kann. Weitere Vorteile und Merkmale ergeben sich aus den Unteransprüchen und den Ausführungsbeispielen. Hierzu zeigt, teilweise schematisiert:

Fig. 1:  einen Roboter und ein System zum Steuern des Roboters nach einer Ausführung der vorliegenden Erfindung;
Fig. 2:  einen Abstand des Roboters zu vorgegebenen Grenzen;
Fig. 3:  eine Soll-Geschwindigkeit in Abhängigkeit von dem Abstand;
Fig. 4:  eine Dämpfungs-Antriebsgröße in Abhängigkeit von der Soll- und einer Ist-Geschwindigkeit; und
Fig. 5:  ein Verfahren zum Steuern des Roboters nach einer Ausführung der vorliegenden Erfindung.

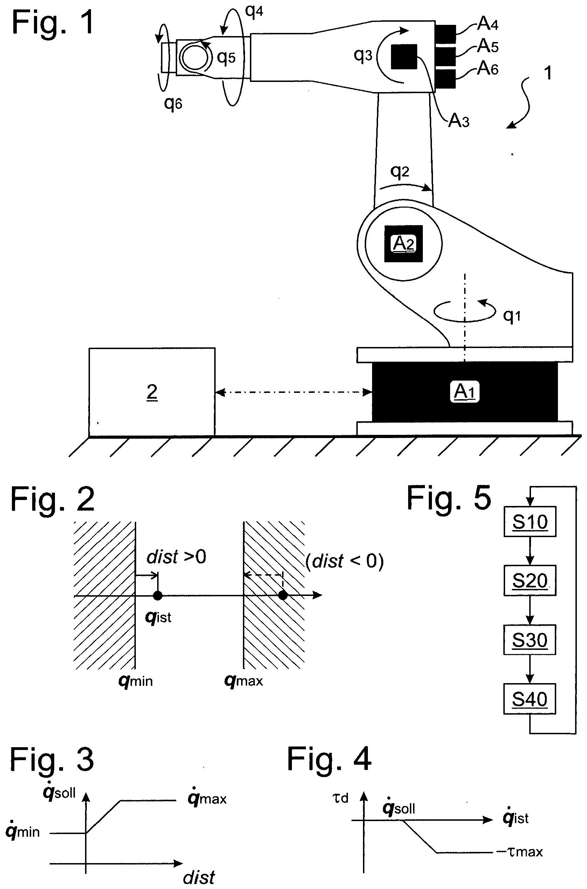

Fig. 1, 5 zeigen einen Roboter 1 mit Antrieben $A_1,..., A_6$ und ein System mit einer Steuerung 2 zum Steuern des Roboters 1 bzw. ein von der Steuerung 2 ausgeführtes Verfahren zum Steuern des Roboters 1 nach einer Ausführung der vorliegenden Erfindung.

In einem ersten Schritt S10 ermittelt die Steuerung 2 den Abstand *dist* des Roboters 1 zu vorgegebenen Grenzen $q_{max}$ , $\boldsymbol{q}_{min}$ gemäß den vorstehend erläuterten Gleichungen (1) bis (1"). Dies ist in Fig. 2 illustriert. Dort bezeichnet $\boldsymbol{q}_{ist}$ eine erfasste Ist-Position des Roboters, 1, beispielsweise eine oder mehrere seiner in Fig. 1 angedeuteten Gelenkwinkel $q_1,...,q_6$ oder eine oder mehrere Komponenten einer diesen entsprechenden Lage und/oder Orientierung seines TCPs im Arbeitsraum. Entsprechend können $\boldsymbol{q}_{max}$, $\boldsymbol{q}_{min}$ ebenfalls insbesondere im Gelenkwinkel- oder Arbeitsraum vorgegeben sein.

In der dargestellten Pose des Roboters 1 ist exemplarisch der positive Abstand zur Untergrenze $q_{min}$ gemäß Gleichungen (1') kleiner als der ebenfalls positive Abstand zur Obergrenze $q_{max}$ gemäß Gleichungen (1) und wird daher gemäß Gleichungen (1") als der Abstand *dist* des Roboters 1 zu den vorgegebenen Grenzen $\boldsymbol{q}_{max}$, $\boldsymbol{q}_{min}$ ermittelt. Zur Illustration ist gestrichelt auch eine andere Ist-Position des Roboters im unzulässigen (schraffiert in Fig. 1) Bereich über der vorgegebenen Obergrenze $q_{max}$ angedeutet, was einem negativen Abstand < 0 entspräche.

Sind dabei Grenzen in mehreren Raumrichtungen bzw. Gelenken vorgegeben, kann insbesondere der (absolut gesehen bzw. vorzeichenbehaftet) kleinste Abstand als der Abstand *dist* ermittelt werden, wie in Fig. 2 illustriert.

Die Abstandsermittlung kann ebenso wie die nachfolgend beschriebenen Schritte in einer Ausführung komponentenweise erfolgen, so dass $\boldsymbol{q}_{min}$, $\boldsymbol{q}_{max}$ und $\boldsymbol{q}_{ist}$ jeweils eine Komponente der Position längs der in Fig. 2 angedeuteten Koordinatenachse darstellen können.

Dann ermittelt die Steuerung 2 in einem Schritt S20 gemäß Gleichung (3') unter der zusätzlichen Randbedingung gemäß Gleichung (2) eine Soll-Geschwindigkeit $\dot{\boldsymbol{q}}_{soll}$. Dies ist in Fig. 3 illustriert. Man erkennt in dieser einerseits die lineare Abhängigkeit der Soll-Geschwindigkeit $\dot{\boldsymbol{q}}_{soll}$ von dem (Ist-positions-abhängigen) Abstand des Roboters 1 zu den vorgegebenen Grenzen (vgl. Gleichung (3')) und andererseits die betragsmäßige Begrenzung der Soll-Geschwindigkeit durch eine vorgegebene Maximalgeschwindigkeit $\dot{\boldsymbol{q}}_{max}$ nach oben und durch eine vorgegebene Minimalgeschwindigkeit $\dot{\boldsymbol{q}}_{min}$ nach unten (vgl. Gleichung (2)). Dies kann, wie erwähnt, insbesondere komponentenweise erfolgen, so dass $\dot{\boldsymbol{q}}_{soll}$ , $\dot{\boldsymbol{q}}_{max}$ und $\dot{\boldsymbol{q}}_{min}$ jeweils eine Komponente der Geschwindigkeit darstellen können.

Dann ermittelt die Steuerung 2 in einem Schritt S30 gemäß Gleichung (9") unter den zusätzlichen Randbedingungen (7') und (8) eine Dämpfungs-Antriebsgröße $\tau_d$. Dies ist in Fig. 4 illustriert. Man erkennt in dieser zum Einen die betragsmäßige Begrenzung der Dämpfungs-Antriebsgröße $\tau_d$ durch die vorgegebene Maximalgröße $\tau_{max}$ gemäß Gleichung (8). Zum Anderen wird deutlich, dass die Dämpfungs-Antriebsgröße $\tau_d$ derart ermittelt wird, dass sie gleich Null ist, sofern die Soll-Geschwindigkeit $\dot{\boldsymbol{q}}_{soll}$ die Ist-Geschwindigkeit $\dot{\boldsymbol{q}}_{ist}$ betragsmäßig übersteigt (vgl. Gleichung (7')). Wenn umgekehrt die Ist-Geschwindigkeit $\dot{\boldsymbol{q}}_{ist}$ die Soll-Geschwindigkeit $\dot{\boldsymbol{q}}_{soll}$ betragsmäßig übersteigt, so wird die Dämpfungs-Antriebsgröße $\tau_d$ gemäß Gleichung (9") derart ermittelt, dass sie betragsmäßig proportional zur Differenz zwischen der

Soll-Geschwindigkeit $\dot{q}_{soll}$ und der Ist-Geschwindigkeit $\dot{q}_{ist}$ wächst, bis sie durch die Maximalgröße $\tau_{max}$ begrenzt wird. Dabei ist die Dämpfungs-Antriebsgröße $\tau_d$ gemäß Gleichung (6) gegensinnig zur Ist-Geschwindigkeit $\dot{q}_{ist}$. Wiederum kann dies, wie erwähnt, insbesondere komponentenweise erfolgen, so dass $\dot{q}_{soll}$, $\dot{q}_{ist}$ und $\tau_d$ bzw. $\tau_{max}$ jeweils eine Komponente der Geschwindigkeit bzw. eine Antriebskraft oder ein Antriebs(dreh)moment eines Antriebs $A_1,...A_6$ darstellen können.

Diese Dämpfungs-Antriebsgröße $\tau_d$ kommandiert die Steuerung 2 in einem Schritt S40 additiv zu einer Nachgiebigkeits-Antriebsgröße, welche auf Basis oinor einer Impedanz- oder Admittanzregelung, in an sich bekannter und daher hier nicht näher dargestellten Weise ermittelt wird, an die Antriebe $A_1,...,A_6$ des Roboters 1.

Obwohl in der vorhergehenden Beschreibung exemplarische Ausführungen erläutert wurden, sei darauf hingewiesen, dass eine Vielzahl von Abwandlungen möglich ist. So können die Schritte, wie mehrfach erwähnt, insbesondere jeweils für eine oder mehrere Positions-, Geschwindigkeits- und Antriebsgrößen-Komponenten bzw. Freiheitsgrade des Roboters 1 durchgeführt werden, die vorstehend vektoriell notierten Größen entsprechend insbesondere auch skalar sein und eine Position, Geschwindigkeit bzw. Antriebsgröße in einer Raumrichtung oder einem Antriebs- oder Gelenkkoordinatenfreiheitsgrad bezeichnen.

Die einzelnen Berechnungen bzw. Gleichungen können insbesondere jeweils im Antriebs- bzw. Gelenkkoordinatenraum oder im Arbeitsraum des Roboters ausgeführt werden, wobei Größen bei Bedarf zwischen diesen Räumen durch Vorwärts- bzw. Rückwärtstransformation überführt werden können. So können beispielsweise im Arbeitsraum vorgegebene Grenzen in den Antriebs- bzw. Gelenkkoordinatenraum transformiert und dort dann direkt Antriebskräfte bzw. -(dreh)momente ermittelt werden. Gleichermaßen können auch im Arbeitsraum ermittelte Antriebsgrößen in den Antriebs- bzw. Gelenkkoordinatenraum transformiert werden.

Bezugszeichenliste

| | |
|---|---|
| 1 | Roboter |
| 2 | Steuerung |
| $A_1,...,A_6$ | Antrieb |
| $q_1,...,q_6$ | Gelenkwinkel |
| $q_{ist}$ | Ist-Position |
| $q_{max}$, $q_{min}$ | Ober-/Untergrenze |
| $\dot{q}_{soll}$ | Soll-Geschwindigkeit |
| $\dot{q}_{ist}$ | Ist-Geschwindigkeit |
| $\dot{q}_{max}$, $\dot{q}_{min}$ | Maximal-/Minimalgeschwindigkeit |
| $dist$ | Abstand |
| $\tau_d$ | Dämpfungs-Antriebsgröße |
| $\tau_{max}$ | Maximalgröße |

**Patentansprüche**

**1.** Verfahren zum Steuern eines Roboters (1), mit den Schritten:

Ermitteln (S30) einer Ist-Geschwindigkeit ($\dot{q}_{ist}$) des Roboters;
Ermitteln (S20) einer Soll-Geschwindigkeit ($\dot{q}_{soll}$);
Ermitteln (S30) einer Dämpfungs-Antriebsgröße ($\tau_d$) auf Basis einer Differenz zwischen der Soll-Geschwindigkeit und der Ist-Geschwindigkeit; und
Ansteuern (S40) einer Antriebsanordnung mit wenigstens einem Antrieb ($A_1,...,A_6$) des Roboters auf Basis der Dämpfungs-Antriebsgröße;
wobei die Soll-Geschwindigkeit auf Basis einer vorgegebenen Maximalgeschwindigkeit ($\dot{q}_{max}$), einer vorgegebenen Minimalgeschwindigkeit ($\dot{q}_{min}$) und/oder eines Abstands ($dist$) des Roboters zu wenigstens einer vorgegebenen Grenze ($q_{max}$, $q_{min}$) ermittelt wird,
**dadurch gekennzeichnet, dass**
eine Nachgiebigkeits-Antriebsgröße auf Basis einer Impedanz- oder
Admittanzregelung ermittelt wird, die eine Feder-Dämpfer-Charakteristik oder eine Masse-Feder-Dämpfer-Charakteristik des Roboters vermittelt, und die Antriebsanordnung auf Basis einer Summe der Dämpfungs-Antriebsgröße und der Nachgiebigkeits-Antriebsgröße angesteuert wird (S40); und dass die Dämpfungs-Antriebsgröße derart ermittelt wird, dass sie gleich Null ist, sofern die Soll-Geschwindigkeit die Ist-Geschwindigkeit betragsmäßig übersteigt und die Dämpfungs-Antriebsgröße derart ermittelt wird, dass sie betragsmäßig proportional zur Differenz zwischen der Soll-Geschwindigkeit und der Ist-Geschwindigkeit ist, wenn die Ist-Geschwindigkeit die Soll-Geschwindigkeit betragsmäßig übersteigt.

2. Verfahren nach Anspruch 1, wobei die Soll-Geschwindigkeit betragsmäßig durch die vorgegebene Maximalgeschwindigkeit nach oben und/oder durch die vorgegebene Minimalgeschwindigkeit nach unten begrenzt ist.

3. Verfahren nach einem der vorhergehenden Ansprüche, wobei die Soll-Geschwindigkeit betragsmäßig mit dem Abstand des Roboters zu der vorgegebenen Grenze wächst, wenn der Roboter sich auf einer zulässigen Seite dieser Grenze befindet.

4. Verfahren nach einem der vorhergehenden Ansprüche, wobei die Dämpfungs-Antriebsgröße betragsmäßig durch eine vorgegebene Maximalgröße ($\tau_{max}$) nach oben begrenzt ist.

5. System (2) zum Steuern eines Roboters (1), das aufweist:

Mittel (2) zum Ermitteln einer Ist-Geschwindigkeit ($\dot{q}_{ist}$) des Roboters;
Mittel (2) zum Ermitteln einer Soll-Geschwindigkeit ($q_{soll}$);
Mittel (2) zum Ermitteln einer Dämpfungs-Antriebsgröße ($\tau_d$) auf Basis einer Differenz zwischen der Soll-Geschwindigkeit und der Ist-Geschwindigkeit; und
Mittel (2) zum Ansteuern einer Antriebsanordnung mit wenigstens einem Antrieb ($A_1$,..., $A_6$) des Roboters auf Basis der Dämpfungs-Antriebsgröße;
**dadurch gekennzeichnet, dass** das System zur Durchführung eines Verfahrens nach einem der vorhergehenden Ansprüche eingerichtet ist.

6. Computerprogrammprodukt mit einem Programmcode, der auf einem von einem Computer lesbaren Medium gespeichert ist, zur Durchführung eines Verfahrens nach einem der vorhergehenden Ansprüche 1 - 4.

**Claims**

1. A method of controlling a robot (1), the method comprising the steps of:

determining (S30) an actual speed ($\dot{q}_{ist}$) of the robot;
determining (S20) a target speed ($\dot{q}_{soll}$);
determining (S30) a damping drive parameter ($\tau_d$) on the basis of a difference between the target speed and the actual speed; and
controlling (S40) a drive arrangement comprising at least one drive ($A_1$ , ... , $A_6$) of the robot on the basis of the damping drive parameter;
wherein the target speed is determined on the basis of a predetermined maximum speed ($\dot{q}_{max}$), a predetermined minimum speed ($\dot{q}_{min}$) and / or a distance (*dist*) of the robot to at least one predetermined boundary ($q_{max}$, $q_{min}$
**characterised in that**
a compliance drive parameter is determined on the basis of an impedance or admittance control which provides a spring damper characteristic or a mass spring damper characteristic of the robot, and the drive arrangement is controlled on the basis of a sum of the damping drive parameter and the compliance drive parameter (S40); and **in that** the damping drive parameter is determined in such a way that it is equal to zero if the target speed exceeds the actual speed in terms of its absolute value, and the damping drive parameter is determined in such a way that, in terms of its absolute value, it is proportional to the difference between the target speed and the actual speed if the actual speed exceeds the target speed in terms of its absolute value.

2. The method according to claim 1, wherein, in terms of its absolute value, the target speed is limited, at the upper end, by the predetermined maximum speed and / or, at the lower end, by the predetermined minimum speed.

3. The method according to any one of the preceding claims, wherein, in terms of its absolute value, the target speed increases with the distance of the robot to the predetermined boundary when the robot is located on a permissible side of said boundary.

4. The method according to any one of the preceding claims, wherein, in terms of its absolute value, the damping drive parameter is limited, at the upper end, by a predetermined maximum value ($\tau_{max}$).

5. A system (2) for controlling a robot (1), wherein the system comprises:

means (2) for determining an actual speed ($\dot{q}_{ist}$) of the robot;
means (2) for determining a target speed ($\dot{q}_{soll}$);
means (2) for determining a damping drive parameter ($\tau_d$) on the basis of a difference between the target speed and the actual speed; and
means (2) for controlling a drive arrangement comprising at least one drive ($A_1$, ... , $A_6$) of the robot on the basis of the damping drive parameter;
**characterised in that** the system is set up to carry out a method according to any one of the preceding claims.

6. A computer program product which comprises a program code which is stored on a computer readable medium, for carrying out the method according to any one of the preceding claims 1 to 4.

## Revendications

1. Procédé pour commander un robot (1), avec les étapes :

de détermination (E30) d'une vitesse réelle ( $\dot{q}_{réelle}$ ) du robot ;

de détermination (E20) d'une vitesse théorique ( $\dot{q}_{théorique}$ ) ;

de détermination (E30) d'une grandeur d'entraînement d'amortissement ($\tau_d$) sur la base d'une différence entre la vitesse théorique et la vitesse réelle ; et

de pilotage (E40) d'un ensemble d'entraînement avec au moins un entraînement ($A_1$, ..., $A_6$) du robot sur la base de la grandeur d'entraînement d'amortissement ;

dans lequel la vitesse théorique est déterminée sur la base d'une vitesse maximale ( $\dot{q}_{max}$ ) prédéfinie, d'une

vitesse minimale ( $\dot{q}_{min}$ ) prédéfinie et/ou d'une distance (*dist*) du robot par rapport au moins à une limite ($q_{max}$, $q_{min}$) prédéfinie,

**caractérisé en ce que**

une grandeur d'entraînement de complaisance est déterminée sur la base d'une commande d'impédance ou d'admittance, qui véhicule une caractéristique de ressort-amortisseur ou une caractéristique de masse-ressort-amortisseur du robot, et l'ensemble d'entraînement est piloté (E40) sur la base d'une somme de la grandeur d'entraînement d'amortissement et de la grandeur d'entraînement de complaisance ; et que la grandeur d'entraînement d'amortissement est déterminée de telle manière qu'elle est égale à 0 dans la mesure où la vitesse théorique dépasse en termes de valeur la vitesse réelle et la grandeur d'entraînement d'amortissement est déterminée de telle manière qu'elle est en termes de valeur proportionnelle à la différence entre la vitesse théorique et la vitesse réelle lorsque la vitesse réelle dépasse en termes de valeur la vitesse théorique.

2. Procédé selon la revendication 1, dans lequel la vitesse théorique est limitée en termes de valeur vers le haut par la vitesse maximale prédéfinie et/ou vers le bas par la vitesse minimale prédéfinie.

3. Procédé selon l'une quelconque des revendications précédentes, dans lequel la vitesse théorique augmente en termes de valeur avec la distance du robot par rapport à la limite prédéfinie lorsque le robot se trouve sur un côté admis de ladite limite.

4. Procédé selon l'une quelconque des revendications précédentes, dans lequel la grandeur d'entraînement d'amortissement est limitée en termes de valeurs vers le haut par une grandeur maximale ($\tau_{max}$) prédéfinie.

5. Système (2) destiné à commander un robot (1), qui présente :

des moyens (2) pour déterminer une vitesse réelle ( $\dot{q}_{réelle}$ ) du robot ;

des moyens (2) pour déterminer une vitesse théorique ( $\dot{q}_{théorique}$ ) ;

des moyens (2) pour déterminer une grandeur d'entraînement d'amortissement ($\tau_d$) sur la base d'une différence entre la vitesse théorique et la vitesse réelle ; et

des moyens (2) pour piloter un ensemble d'entraînement avec au moins un entraînement ($A_1$, ..., $A_6$) du robot

sur la base de la grandeur d'entraînement d'amortissement ;
**caractérisé en ce que** le système est mis au point pour mettre en oeuvre un procédé selon l'une quelconque des revendications précédentes.

6. Produit-programme d'ordinateur avec un code de programme, qui est mémorisé sur un support lisible par ordinateur, destiné à mettre en oeuvre un procédé selon l'une quelconque des revendications précédentes 1 - 4.

# Fig. 1

# Fig. 2

# Fig. 5

# Fig. 3

# Fig. 4

**EP 3 170 628 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20040128026 A1